(19) Europäisches Patentamt
European Patent Office
Office européen des brevets

(11) **EP 3 239 555 A1**

(12) **EUROPEAN PATENT APPLICATION**
published in accordance with Art. 153(4) EPC

(43) Date of publication:
01.11.2017 Bulletin 2017/44

(51) Int Cl.:
*F16F 9/32* (2006.01)   *F16F 9/04* (2006.01)
*F16F 9/48* (2006.01)   *F16M 11/04* (2006.01)
*F16M 11/20* (2006.01)

(21) Application number: 15872837.8

(22) Date of filing: 16.12.2015

(86) International application number:
**PCT/JP2015/085169**

(87) International publication number:
**WO 2016/104268 (30.06.2016 Gazette 2016/26)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: 24.12.2014 JP 2014259704

(71) Applicant: **Shotoku Corporation
Kawasaki-shi, Kanagawa 213-0002 (JP)**

(72) Inventor: **FUJITA Iwao
Kawasaki-shi
Kanagawa 213-0002 (JP)**

(74) Representative: **Winter, Brandl, Fürniss, Hübner,
Röss, Kaiser, Polte - Partnerschaft mbB
Patent- und Rechtsanwaltskanzlei
Alois-Steinecker-Strasse 22
85354 Freising (DE)**

(54) **GAS SPRING AND MOUNTING DEVICE**

(57)  Provided is a gas spring configured so that a reduction in output due to the movement of a piston in the direction in which a rod is pushed out can be compensated for. A gas spring (15) is configured so that the leading end of a piston rod (55) is moved in a predetermined range by a change in the amount of gas filling an inside of a cylinder (51). The cylinder (51), which is substantially cylindrical shape, includes a tapered section, an inner diameter of the cylinder (51) at the tapered section increasing as the cylinder (51) progress in a direction in which the rod (55) provided to a piston (54) protrudes.

FIG. 2

## EP 3 239 555 A1

**Description**

Technical Field

The present invention relates to a gas spring and a mounting device.

Background Art

Patent Document 1 states a load mounting device. The load mounting device includes a cylinder member that supports a platform holding a camera, such that the platform can be freely raised and lowered, and a wheel shaft that rotates in tandem with the raising and lowering of the cylinder member. The load mounting device performs a compensation action for the repulsive force of a gas spring, arising as a result of a change in the radius r of the moment of a non-circular cam of the wheel shaft. Thus, according to the invention stated in Patent Document 1, the load on the cylinder member side and the repulsive force of the gas spring that changes with the stroke of the cylinder member are balanced throughout the entire range of the stroke.

Citation List

Patent Literature

Patent Document 1: Japanese Unexamined Patent Application Publication No. 2005-140268A

Summary of Invention

Technical Problem

The output of a gas spring typically changes depending on the position of the piston. Specifically, the output of the gas spring gradually decreases as the piston moves in the direction in which the rod is pushed out. According to the invention stated in Patent Document 1, the wheel shaft having the non-circular cam is required to be interposed in order to compensate for the drop in output of the gas spring and achieve a constant output. The invention stated in Patent Document 1 thus has a problem in that the wheel shaft makes the configuration of the device more complex and also increases the size of the device.

Having been achieved in light of such circumstances, an object of the present invention is to provide a gas spring and a mounting device that can compensate for a reduction in output due to the movement of a piston in the direction in which the rod is pushed out.

Solution to Problem

To solve the above-described problem, a mounting device according to an aspect of the present invention includes, for example: a cylinder having a substantially cylindrical shape and covered at both ends; a piston moving substantially parallel to a center axis of the cylinder; a rod having a bar-like shape, a first end of the rod protruding from the cylinder and a second end of the rod provided on the piston; and a diaphragm, formed from a material having elasticity, the diaphragm being provided within the cylinder, and the diaphragm making contact with an inner wall surface of the cylinder and a base surface of the piston. The gas spring moves the first end in a predetermined range by a change in an amount of a gas filling an inside of the cylinder, and the cylinder includes a tapered section, an inner diameter of the cylinder at the tapered section increasing as the cylinder progresses in a direction in which the rod protrudes.

According to the mounting device of the present invention, the cylinder includes the tapered section in which the inner diameter of the cylinder increases as the cylinder progresses in the direction in which the rod protrudes. Accordingly, a pressurized surface area of the diaphragm broadens as the piston moves in the direction in which the rod protrudes. Thus, a reduction in output due to the movement of the piston in the direction in which the rod is pushed out can be compensated for.

To solve the above-described problem, a mounting device according to an aspect of the present invention includes, for example, a loading table on which an object is placed, and a gas spring. The gas spring includes: a cylinder having a substantially cylindrical shape and covered at both ends; a piston moving substantially parallel to a center axis of the cylinder; a rod having a bar-like shape, a first end of the rod protruding from the cylinder and connected to the loading table and a second end of the rod provided on the piston; and a diaphragm, formed from a material having elasticity, the diaphragm being provided within the cylinder, and the diaphragm making contact with an inner wall surface of the cylinder and a base surface of the piston. The gas spring raises and lowers the loading table in a predetermined range by a change in an amount of a gas filling the inside of the cylinder, and the cylinder includes a tapered section, an inner diameter of the cylinder at the tapered section increasing as the cylinder progresses in a direction in which the rod protrudes. Accordingly, as the piston moves (rises) in a direction in which the loading table rises (in which the rod is pushed out), the pressurized surface area of the diaphragm broadens. Accordingly, a reduction in output as the piston rises can be compensated for.

Here, a length of the tapered section in a direction following the center axis may be substantially equal to a movement amount of the piston when the loading table is raised and lowered in the predetermined range. Accordingly, a reduction in output of the gas spring as the piston rises can be compensated for across the entire range of movement of the piston.

Here, the diaphragm may include a flange section provided on an inner peripheral surface of the cylinder, a base section making contact with the piston and moving along the center axis of the cylinder, and a peripheral wall section having a substantially cylindrical shape, the flange section and the base section being provided on respective ends of the peripheral wall section. The peripheral wall section may have a tapered shape, a flange section side of the peripheral wall section being narrower than a base section side of the peripheral wall section, the tapered shape having a taper angle substantially equal to a taper angle of the tapered section. The flange section may be provided in a part of the cylinder where the inner diameter is small. Accordingly, a peripheral wall section of the diaphragm can make tight contact with an inner wall of the tapered section.

Here, the tapered section may include a first tapered section having a first taper angle and a second tapered section having a second taper angle greater than the first taper angle, and the second tapered section may be formed further on a side in which the rod projects than the first tapered section. Accordingly, an upward pushing force of the piston produced by gas pressure can be more finely adjusted.

Here, a pressurized surface area of the diaphragm in a first state, the first state being a state in which the piston rod protrudes the least, may be equal to a cross-sectional area, in a cross-section orthogonal to the center axis, of a hollow part of the cylinder at a first position, the first position being a position where an inner diameter of the tapered section is narrowest. The pressurized surface area of the diaphragm in a second state, the second state being a state in which the piston rod protrudes the most, may be equal to a cross-sectional area, in a cross-section orthogonal to the center axis, of the hollow part of the cylinder at a second position, the second position being a position where the inner diameter of the tapered section is widest. A product obtained by multiplying a first volume, the first volume being a volume of a region filled with a gas in the first state, by a sum of a first gauge pressure, the first gauge pressure being a gauge pressure in the first state, and atmospheric pressure, may be equal to a product obtained by multiplying a sum of the first volume and a volume of the tapered section by a sum of a second gauge pressure, the second gauge pressure being a gauge pressure in the second state, and atmospheric pressure. A product of the first gauge pressure and a diameter at the first position may be equal to a product of the second gauge pressure and a diameter at the second position. Accordingly, an output that is constant, regardless of the position of the piston, can be obtained.

Advantageous Effects of Invention

Accordingly, a reduction in output due to the movement of the piston in the direction in which the rod is pushed out can be compensated for.

Brief Description of Drawings

FIG. 1 is a conceptual diagram illustrating an example of the overall configuration of a pedestal 1 according to a first embodiment.
FIG. 2 is a cross-sectional view illustrating an example of the overall configuration of a gas spring.
FIG. 3 is a perspective view illustrating an overview of a diaphragm.
FIG. 4 is a diagram illustrating part of the gas spring in an enlarged manner to illustrate a method for calculating a taper angle.
FIG. 5 is a cross-sectional view illustrating an example of the overall configuration of a gas spring in a pedestal 2 according to a second embodiment.

Description of Embodiments

Embodiments of the present invention will be described in detail below with reference to the drawings.

First Embodiment

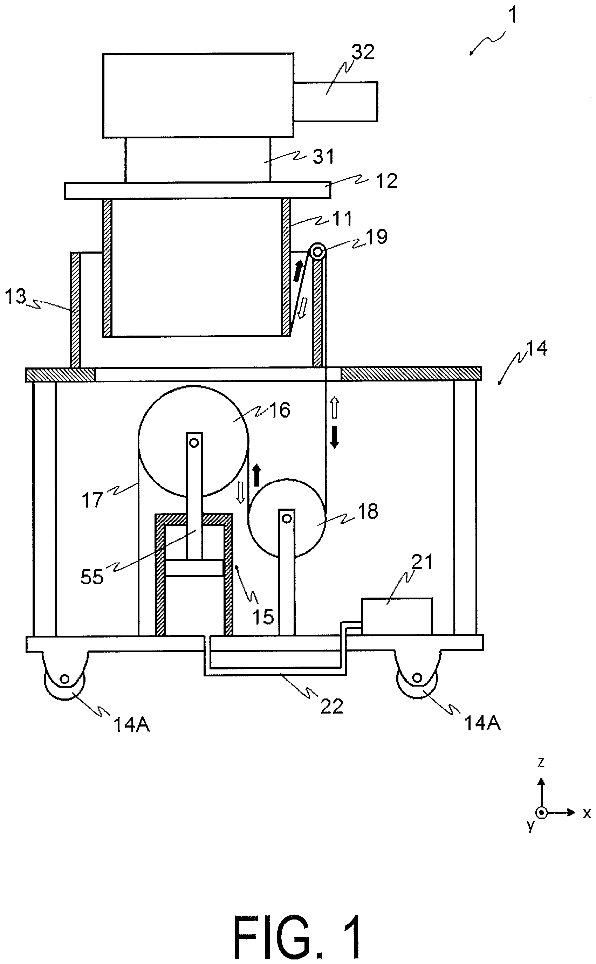

FIG. 1 is a conceptual diagram illustrating an example of the overall configuration of a pedestal 1 embodying a mounting device according to the present invention.

The pedestal 1 primarily includes: a cylinder member 11 capable of moving up and down; a loading table 12 attached to an upper end of the cylinder member 11; a base cylinder 13 into which the cylinder member 11 is inserted; a truck 14 that supports the base cylinder 13; a gas spring 15 provided inside the truck 14; a first pulley 16 provided on the gas spring 15; a wire 17; a second pulley 18 provided in the truck 14; and a third pulley 19 provided on the cylinder member 11. Wheels 14A for moving upon a floor are provided on the bottom of the truck 14.

A platform 31 is attached to the loading table 12. A camera 32 used for filming is mounted on the pedestal 1 with the platform 31 interposed therebetween. A reservoir tank 21 is connected to the gas spring 15 by an air pipe 22.

The first pulley 16 is provided on a leading end of a piston rod 55 (described in detail later) of the gas spring 15. The first pulley 16 moves up and down as the piston rod 55 moves up and down.

One end of the wire 17 is fixed to the truck 14, and another end of the wire 17 is fixed to a bottom end of the cylinder member 11, with the wire 17 running over the first pulley 16, the second pulley 18, and the third pulley 19.

When the piston rod 55, or in other words, the first pulley 16 rises, the wire 17 moves in a direction that increases the length between the truck 14 and the first pulley 16 (the direction indicated by the black arrows in FIG. 1). The cylinder member 11 moves upward (a +z direction) as a result. Conversely, when the piston rod 55 falls, the first pulley 16 also falls, and the wire 17 moves in the opposite direction as when the piston rod 55 rises (the direction indicated by the white arrows in FIG. 1). The cylinder member 11 moves downward (a -z direction) as a result.

In the present embodiment, the wire 17 is used, and thus the movement amount of the wire 17, or in other words, the movement amount of the cylinder member 11, can be made double the movement amount of the piston rod 55. Additionally, using the wire 17 makes it possible to handle a situation where a plurality of gas springs 15 are provided, and also increases the freedom with which the gas spring 15 can be arranged.

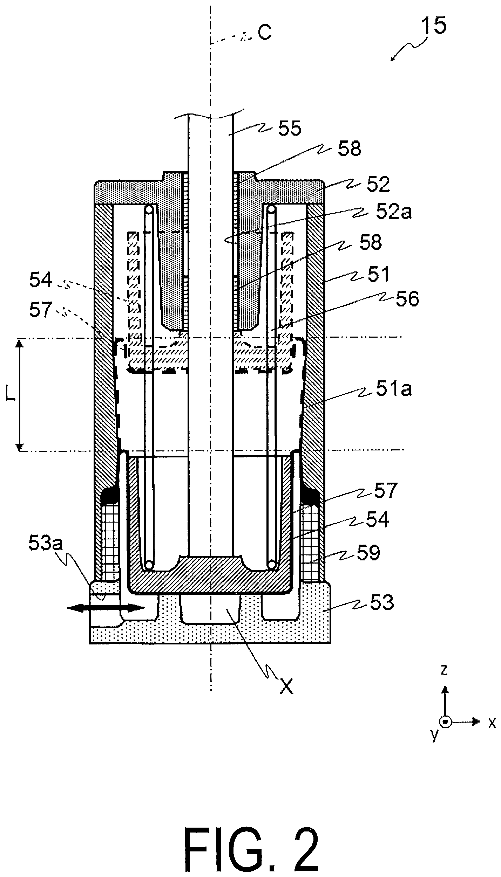

FIG. 2 is a cross-sectional view illustrating an example of the overall configuration of the gas spring 15. In FIG. 2, solid lines indicate a state in which a piston 54 is in a lowermost position, corresponding to a -z-side end (that is, when the piston rod 55 is protruding the least), whereas broken lines indicate a state in which the piston 54 is in an uppermost position, corresponding to a +z-side end (that is, when the piston rod 55 is protruding the most).

The gas spring 15 primarily includes a cylinder 51, bonnets 52 and 53, the piston 54, the piston rod 55, a spring 56, a diaphragm 57, a shaft bearing 58, and a holding member 59.

The cylinder 51 is a substantially cylindrical member. The cylinder 51 has a tapered section 51a in which the inner diameter of the cylinder 51 increases as the cylinder 51 progresses in the direction in which the piston rod 55 protrudes (the +z direction).

The tapered section 51a is formed having substantially the same length as a movement distance (stroke) L of the piston 54 (described in detail later). Here, "stroke" refers to the distance between the position of the piston 54 when the piston 54 is at the lowermost position and the position of the piston 54 when the piston 54 is at the uppermost position. Additionally, the tapered section 51a is substantially the same as a region where a peripheral wall section 57a (described in detail later) of the diaphragm 57 makes contact when the piston 54 moves between the lowermost position and the uppermost position.

The tapered section 51a is formed such that the diameter changes by approximately from 2 to 3 mm for a stroke L of from 200 to 300 mm. In other words, a taper angle $\theta a$ of the tapered section 51a is approximately 0.5 degrees (in the present embodiment, from approximately 0.38 degrees to approximately 0.86 degrees, for example). However, the taper angle of the tapered section 51a is not limited thereto. A method for calculating the taper angle $\theta a$ will be described in detail later.

The bonnets 52 and 53 are provided on respective ends of the cylinder 51 covering openings formed in those ends of the cylinder 51. The bonnet 52 and the bonnet 53 are connected by tie rods (not illustrated). A hollow part is formed within the cylinder 51 as a result.

A supply port 53a is formed in the bonnet 53, and a gas (air, in the present embodiment) is injected into and exhausted from an airtight chamber X formed between the diaphragm 57 and an inner wall of the bonnet 53 through the supply port 53a. The air pipe 22, or in other words, the reservoir tank 21, is attached to the supply port 53a. Although the reservoir tank 21 is attached to reduce pressure fluctuations arising as the volume of the airtight chamber X fluctuates in response to the piston 54 moving up and down when such pressure fluctuations are great, the reservoir tank 21 is not a necessary part of the present invention.

The piston 54 is a substantially closed-ended cylindrical member that moves substantially parallel to a center axis C of the cylinder 51. One end of the piston rod 55 is provided on an inner side of a base surface of the piston 54. Another end of the piston rod 55 protrudes to the exterior of the gas spring 15 through a hole 52a formed in the bonnet 52. The piston rod 55 is rotatably supported by the shaft bearing 58 provided in the hole 52a.

The first pulley 16 is connected to the end of the piston rod 55 that protrudes from the cylinder 51. The cylinder member 11 is connected to the first pulley 16 via the wire 17 and the like. When the piston 54 moves up and down (the ±z direction) within the cylinder 51, the cylinder member 11 also moves up and down in tandem therewith.

One end of the spring 56 is provided on the inner side of the base surface of the piston 54. The spring 56 is a coil spring, for example. The one end of the spring 56 is provided on the inner side of the base surface of the piston 54, and another end is provided on the bonnet 52. The spring 56 imparts a downward (-z direction) force on the piston 54.

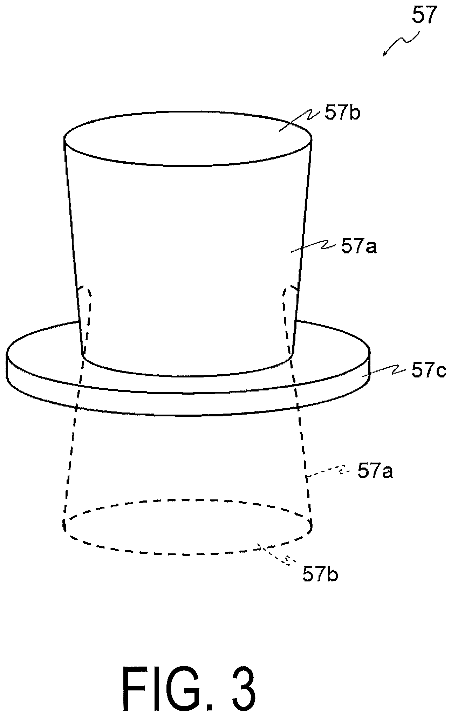

An outer side of the base surface of the piston 54 presses on the diaphragm 57. FIG. 3 is a perspective view illustrating an overview of the diaphragm 57. The solid lines in FIG. 3 indicate a state where the diaphragm 57 is not in use, whereas the broken lines in FIG. 3 indicate an example of a state where the diaphragm 57 is in use.

The diaphragm 57 is a substantially closed-ended cylindrical member formed from a material having elasticity, such as rubber. The diaphragm 57 primarily includes: the substantially cylindrical peripheral wall section 57a; a membrane section 57b (corresponding to a base section) formed at one end of the peripheral wall section 57a; and a flange section 57c formed at the end of the peripheral wall section 57a on which the membrane section 57b is not formed.

The membrane section 57b moves along the center axis C under the pressure of a fluid. The membrane section 57b makes contact with the outer side of the base surface of the piston 54. The flange section 57c is formed so as to be thicker than the other sections, and is fixed to the cylinder 51.

The peripheral wall section 57a is formed having a tapered shape, with the flange section 57c side being narrower than the membrane section 57b side. The membrane section 57b is provided on the end of the peripheral wall section 57a having the greater diameter, whereas the flange section 57c is provided on the end of the peripheral wall section 57a having the smaller diameter. A taper angle of the peripheral wall section 57a is substantially the same as the taper angle θa of the tapered section 51a. Note that, the peripheral wall section 57a need not have a tapered shape.

Returning to FIG. 2, the flange section 57c of the diaphragm 57 is pinched between an inner wall of the cylinder 51 and the holding member 59 such that the thickness of the flange section 57c is reduced. As a result, the diaphragm 57 is fixed to the inner side of the cylinder 51. Note that the holding member 59 is provided only to pinch the flange section 57c with the cylinder 51, and can be thought of as a part of the cylinder 51.

Actions of the gas spring 15 configured in this manner will be described next. Under the downward biasing force of the spring 56, the piston 54 is positioned in the lowermost position (an initial position), where the piston 54 is in contact with the inner wall of the bonnet 53. At this time, the peripheral wall section 57a of the diaphragm 57 is in contact with substantially the entire side surface of the piston 54.

Upon pressurized air being supplied from the supply port 53a, the airtight chamber X defined by the holding member 59, the bonnet 53, and the diaphragm 57 enters a pressurized state (from 0.1 to 1 MPa, for example), and an upward (+z direction) force acts on the base surface of the diaphragm 57 (the piston 54). The force pushing the diaphragm 57 (the piston 54) upward produced by the pressurized air is greater than the biasing force of the spring 56, and thus supplying the pressurized air from the supply port 53a causes the piston 54 (the piston rod 55) to rise against the biasing force of the spring 56. The cylinder member 11, or in other words, the camera 32 rises as a result.

As the piston 54 rises, the peripheral wall section 57a of the diaphragm 57 gradually separates from the side surface of the piston 54 and makes contact with the inner wall surface of the cylinder 51, and the folded-back part of the peripheral wall section 57a rises. The diaphragm 57 inverts as a result.

The part of the cylinder 51 that makes contact with the peripheral wall section 57a is the tapered section 51a. Because the taper angle of the peripheral wall section 57a is substantially the same as the taper angle θa of the tapered section 51a, the peripheral wall section 57a can make tight contact with the inner wall of the tapered section 51a upon the diaphragm 57 inverting.

The inner diameter of the tapered section 51a increases as the tapered section 51a progresses in the direction in which the piston rod 55 protrudes (the +z direction), and thus an increased amount of surface area is pressurized as the piston 54 moves upward. Here, the peripheral wall section 57a of the diaphragm 57 makes contact with the inner peripheral surface of the tapered section 51a, and thus the pressurized surface area is substantially the same as the cross-sectional area of the hollow part of the cylinder 51 at a cross-section substantially orthogonal to the center axis C, at the location of the folded-back part of the peripheral wall section 57a. Hereinafter, the cross-sectional area of the hollow part of the cylinder 51 at the cross-section substantially orthogonal to the center axis C will be referred to simply as the cross-sectional area of the cylinder 51.

With a normal gas spring (that is, a gas spring that does not have the tapered section 51a), moving the piston 54 downward reduces the volume of the airtight chamber X. As a result, the pressure of the gas within the airtight chamber X rises, producing a rising force (that is, the output increases. Here, the "rising force" is defined as a force, per unit of surface area, that pushes the piston 54 upward, produced by the pressure of the gas. On the other hand, moving the piston 54 upward increases the volume of the airtight chamber X, reducing the rising force. As a result, the rising force differs depending on the position of the piston 54. Thus, in the case where the pressurized surface area is constant, the rising force and the load of the camera 32 mounted on the loading table 12 will only be balanced at a certain position in the vertical direction (the z direction).

As opposed to this, in the case where the tapered section 51a is provided, the pressurized surface area increases as the piston 54 is moved upward and the rising force decreases. Thus, the reduction in the rising force is compensated for by increasing the pressurized surface area, making the force at which the piston rod 55 pushes the first pulley 16 upward constant. As a result, the force at which the wire 17 raises the cylinder member 11 is constant as well.

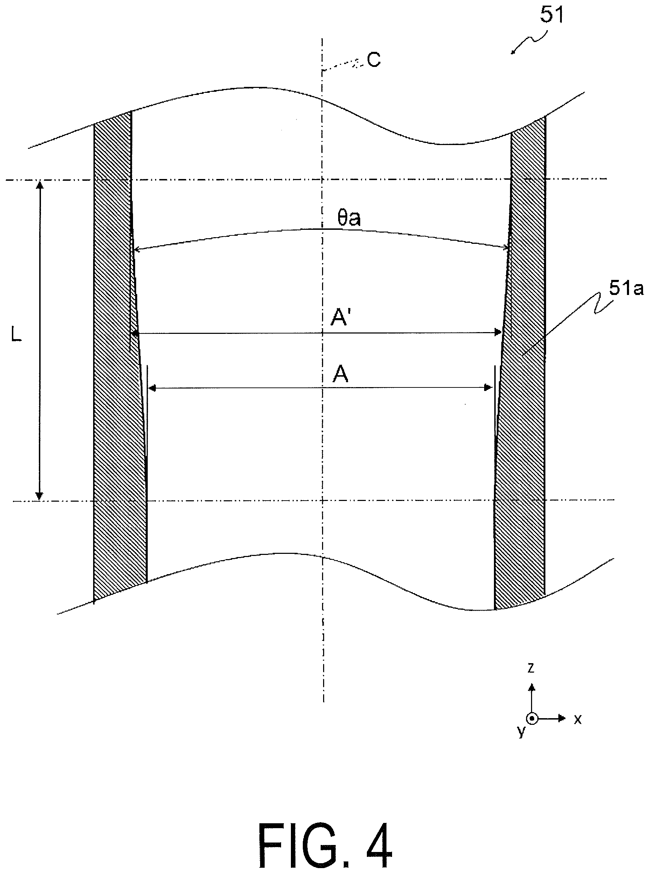

A method for finding the taper angle θa for making the force at which the piston rod 55 pushes the first pulley 16 upward constant will be described in detail next. FIG. 4 is a diagram illustrating part of the gas spring 15 in an enlarged manner to illustrate a method for calculating the taper angle θa. To make it easier to understand the change in the diameter of the tapered section 51a, FIG. 4 illustrates a dimensional change in the x direction in an exaggerated manner compared to the z direction. Thus, the shape of the gas spring 15 illustrated in FIG. 4 is different from the actual shape of the gas spring 15.

As illustrated in FIG. 4, the diameter of the tapered section 51a at the narrowest location (where the inner diameter is the smallest) is represented by A, whereas the diameter of the tapered section 51a at the widest location (where the inner diameter is the greatest) is represented by A'. The stroke of the piston 54 is represented by L.

In a state where the piston rod 55 protrudes the least (that is, when the piston 54 is in the initial position), the pressurized surface area of the diaphragm 57 corresponds to the cross-sectional area of the cylinder 51 at the narrowest location of the tapered section 51a, or in other words, $\pi A^2/4$. A gauge pressure at this time is represented by P. Meanwhile, in a state where the piston rod 55 protrudes the most, the pressurized surface area of the diaphragm 57 corresponds to the cross-sectional area of the cylinder 51 at the widest location of the tapered section 51a, or in other words, $\pi A'^2/4$. A gauge pressure at this time is represented by $P_0$. Atmospheric pressure is represented by $P_k$. The volume of gas with which the reservoir tank 21, the air pipe 22, and the airtight chamber X are filled, or in other words, the volume of a region into which the gas is filled when the piston 54 is in the initial position, is represented by V.

In this case, under Boyle's law, Equation 1 holds true. Here, for a pushing force Q at which the gas pushes the piston 54 upward to be constant regardless of the position of the piston 54, Equation 2 is required to hold true.

[Equation 1]

$$(P + P_k)V = (P_o + P_k)\left(\frac{(A + A')}{2} + V\right)$$

[Equation 2]

$$Q = P \times A = P_o \times A' \quad \therefore \frac{P}{P_o} = \frac{A'}{A}$$

Equation 1 indicates that a product obtained by multiplying the volume (V) of the region filled with the gas when the pressurized surface area is $\pi A^2/4$ by the sum of the gauge pressure (P) and the atmospheric pressure ($P_k$) when the pressurized surface area is $\pi A^2/4$, is equal to a product obtained by multiplying the sum of the volume (V) and the volume of the tapered section 51a by the sum of the gauge pressure ($P_0$) and the atmospheric pressure ($P_k$) when the pressurized surface area is $\pi A'^2/4$. Equation 2, meanwhile, indicates that the product of the gauge pressure (P) when the pressurized surface area is $\pi A^2/4$ and the diameter (A) at the narrowest location of the tapered section 51a is equal to the product of the gauge pressure ($P_0$) when the pressurized surface area is $\pi A'^2/4$ and the diameter (A') at the widest location of the tapered section 51a.

Here, the gauge pressures P and $P_0$, the diameter A, the volume V, and the stroke L are set as desired, and thus the diameter A' is found through Equations 1 and 2. The taper angle θa of the tapered section 51a is then found from the diameters A and A' and the stroke L.

By forming the cylinder 51 using the taper angle θa (the diameters A and A', the stroke L, and the like) found in this manner, the pushing force Q at which the piston 54 is pushed upward under the pressure of the gas can be balanced with the force from the cylinder member 11, the loading table 12, the camera 32, and the like that pushes the first pulley 16 downward (that is, the load mounted on the mounting device), regardless of the position of the piston 54.

The actions of the gas spring 15 will be described again next. The piston 54 rises to the uppermost position, where an upper end surface of the piston 54 makes contact with the bonnet 52, and then stops. When the piston 54 is in the uppermost position, the pressurized air is released, and the pressure within the airtight chamber X returns to atmospheric pressure, the piston 54 (the piston rod 55) then falls under the biasing force of the spring 56. As the piston 54 falls, the peripheral wall section 57a of the diaphragm 57 gradually separates from the inner wall surface of the tapered section 51a and makes contact with the outer peripheral surface of the piston 54, and the folded-back part of the peripheral wall section 57a falls. The diaphragm 57 inverts again as a result. The piston 54 falls to the lowermost position, where the base surface of the piston 54 makes contact with the bonnet 53, and then stops.

According to the present embodiment, a drop in the output of the gas spring caused by the position of the piston 54 rising (the piston 54 moving in the direction in which the piston rod 55 is pushed out) can be compensated for. In particular, by setting the taper angle θa to an appropriate value, the output of the gas spring can be kept constant regardless of the position of the piston 54. In particular, the length of the tapered section 51a in the direction following the center axis C is substantially the same as the stroke of the piston 54, and thus a constant output can be achieved, regardless of the position of the piston 54, throughout the entire range of movement of the piston 54. Accordingly, operations of the pedestal 1 on which the camera 32 is mounted can be stabilized without adding a special configuration. Furthermore, a mechanism for correcting a drop in the output of the gas spring is not needed, and thus the freedom of structural and operational design can be improved.

In the present embodiment, the wall surface of the tapered section 51a is linear in a cross-section including the center axis C and substantially parallel to the center axis C. However, the wall surface of the tapered section 51a in a plane substantially parallel to the center axis C may be curved or may include a curve. For example, the wall surface of the tapered section 51a in the plane substantially parallel to the center axis C may be a curve in which the taper angle θa gradually increases as the wall surface progresses in the +z direction.

Second Embodiment

In the first embodiment, the cylinder 51 having the tapered section 51a with the taper angle θa is used. However, the form of the tapered section is not limited thereto.

A second embodiment is an embodiment in which a plurality of tapered sections having different taper angles are formed in the cylinder. A pedestal 2 serving as a mounting device according to the second embodiment will be described next. Parts that are the same as in the pedestal 1 according to the first embodiment will be given the same reference numerals, and descriptions thereof will be omitted.

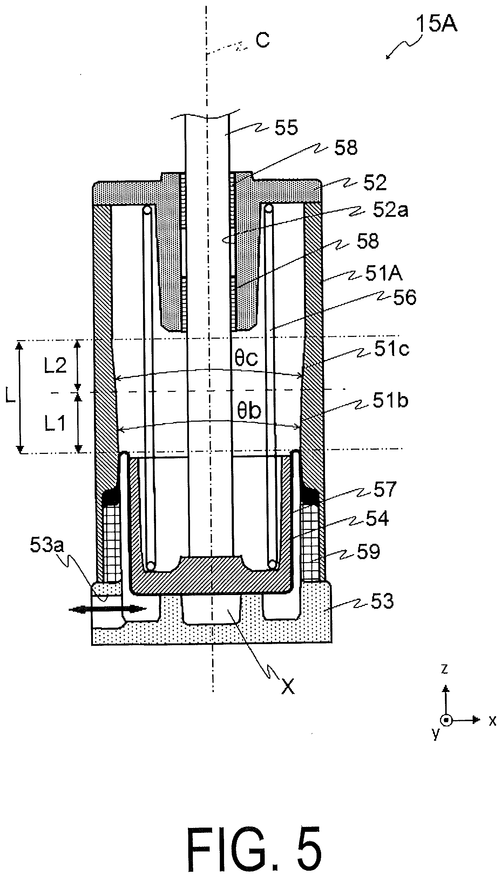

FIG. 5 is a cross-sectional view illustrating an example of the overall configuration of a gas spring 15A. In FIG. 5, solid lines indicate a state in which the piston 54 is in the lowermost position, where the piston 54 makes contact with the inner wall of the bonnet 53 (the initial position), whereas broken lines indicate a state in which the piston 54 is in the uppermost position, where the piston 54 makes contact with the inner wall of the bonnet 52.

The gas spring 15 primarily includes a cylinder 51A, the bonnets 52 and 53, the piston 54, the piston rod 55, the spring 56, the diaphragm 57, the shaft bearing 58, and the holding member 59.

The cylinder 51A is a substantially cylindrical member. The cylinder 51A has a tapered section 51b and a tapered section 51c in which the inner diameter of the cylinder 51A widens as the cylinder 51A progresses in the direction in which the piston rod 55 protrudes (the +z direction).

The tapered sections 51b and 51c are provided adjacent to each other along the center axis C. The sum of a length L1 of the tapered section 51b and a length L2 of the tapered section 51c is substantially equal to the stroke L of the piston 54. Additionally, the tapered section 51b and the tapered section 51c are substantially the same as a region where a peripheral wall section 57a (described in detail later) of the diaphragm 57 makes contact when the piston 54 moves between the lowermost position and the uppermost position.

A taper angle θc of the tapered section 51c is greater than a taper angle θb of the tapered section 51b. Furthermore, an average of the taper angle θb and the taper angle θc is substantially equal to the taper angle θa.

According to the present embodiment, a tapered section including the plurality of tapered sections 51b and 51c having different taper angles is formed in the cylinder 51A. Accordingly, the upward pushing force Q produced on the piston 54 by the gas pressure can be more finely adjusted.

Although the two tapered sections 51b and 51c are formed in the cylinder 51A in the present embodiment, the number of tapered sections is not limited to two, and may be three or more.

Embodiments of the invention have been described in detail with reference to the drawings; however, specific configurations are not limited to the embodiments, and changes in the design or the like are also included in a range which does not depart from the gist of the invention. This invention is not limited to a mounting device on which an object such as a camera is mounted, and can be applied broadly in technology requiring smooth rising and falling operations that are balanced with a mounted load.

Note that in the present invention, "substantially" refers not only to cases of sameness in the strictest sense, but also to error and deviation to an extent where such sameness is not lost. For example, "substantially parallel" is not limited to being parallel in the strictest sense, and includes error of approximately several degrees.

Reference Signs List

| | |
|---|---|
| 1 | Pedestal |
| 2 | Mounting device |
| 11 | Cylinder member |
| 12 | Loading table |
| 13 | Base cylinder |
| 14 | Truck |
| 15 | Gas spring |
| 16 | First pulley |
| 17 | Wire |
| 18 | Second pulley |
| 19 | Third pulley |
| 21 | Reservoir tank |
| 22 | Air pipe |
| 31 | Platform |
| 32 | Camera |
| 51 | Cylinder |
| 51A | Cylinder |
| 51a | Tapered section |
| 51b | Tapered section |
| 51c | Tapered section |
| 52 | Bonnet |
| 52a | Hole |
| 53 | Bonnet |
| 53a | Supply port |
| 54 | Piston |
| 55 | Piston rod |
| 56 | Spring |
| 57 | Diaphragm |
| 57a | Peripheral wall section |
| 57b | Membrane section |
| 57c | Flange section |
| 58 | Shaft bearing |
| 59 | Holding member |

**Claims**

1. A gas spring comprising:

a cylinder having a substantially cylindrical shape and covered at both ends;
a piston moving substantially parallel to a center axis of the cylinder;
a rod having a bar-like shape, a first end of the rod protruding from the cylinder and a second end of the rod provided on the piston; and
a diaphragm, formed from a material having elasticity, the diaphragm being provided within the cylinder, and the diaphragm making contact with an inner wall surface of the cylinder and a base surface of the piston,
wherein the gas spring moves the first end in a predetermined range by a change in an amount of a gas filling an inside of the cylinder, and
the cylinder includes a tapered section, an inner diameter of the cylinder increasing at the tapered section as the cylinder progresses in a direction in which the rod protrudes.

2. A mounting device comprising:

a loading table on which an object is placed; and
a gas spring including:

a cylinder having a substantially cylindrical shape and covered at both ends;
a piston moving substantially parallel to a center axis of the cylinder;
a rod having a bar-like shape, a first end of the rod protruding from the cylinder and connected to the loading table and a second end of the rod provided on the piston; and
a diaphragm, formed from a material having elasticity, the diaphragm being provided within the cylinder, and the diaphragm making contact with an inner wall surface of the cylinder and a base surface of the piston, the gas spring raising and lowering the loading table in a predetermined range by a change in an amount of a gas filling an inside of the cylinder, wherein the cylinder includes a tapered section, an inner diameter of the cylinder increasing at the tapered section as the cylinder progresses in a direction in which the rod protrudes.

3. The mounting device according to claim 2, wherein a length of the tapered section in a direction following the center axis is substantially equal to a movement amount of the piston when the loading table is raised and lowered in a predetermined range.

4. The mounting device according to claim 2 or 3, wherein the diaphragm includes a flange section provided on an inner peripheral surface of the cylinder, a base section making contact with the piston and moving along the center axis of the cylinder, and a peripheral wall section having a substantially cylindrical shape, the flange section and the base section being provided on respective ends of the peripheral wall section;
the peripheral wall section has a tapered shape, a flange section side of the peripheral wall section being narrower than a base section side of the peripheral wall section, the tapered shape having a taper angle substantially equal to a taper angle of the tapered section; and
the flange section is provided in a part of the cylinder where the inner diameter is small.

5. The mounting device according to any one of claims 2 to 4, wherein the tapered section includes a first tapered section having a first taper angle and a second tapered section having a second taper angle greater than the first taper angle; and
the second tapered section is formed further on a side in which the rod projects than the first tapered section.

6. The mounting device according to claim 3, wherein a pressurized surface area of the diaphragm in a first state, the first state being a state in which the piston rod protrudes the least, is equal to a cross-sectional area, in a cross-section orthogonal to the center axis, of a hollow part of the cylinder at a first position, the first position being a position where an inner diameter of the tapered section is narrowest;
the pressurized surface area of the diaphragm in a second state, the second state being a state in which the piston rod protrudes the most, is equal to a cross-sectional area, in a cross-section orthogonal to the center axis, of the hollow part of the cylinder at a second position, the second position being a position where the inner diameter of the tapered section is widest;
a product obtained by multiplying a first volume, the first volume being a volume of a region filled with a gas in the first state, by a sum of a first gauge pressure, the first gauge pressure being a gauge pressure in the first state, and atmospheric pressure, is equal to a product obtained by multiplying a sum of the first volume and a volume of the tapered section by a sum of a second gauge pressure, the second gauge pressure being a gauge pressure in the second state, and atmospheric pressure; and
a product of the first gauge pressure and a diameter at the first position is equal to a product of the second gauge pressure and a diameter at the second position.

1

32

31

12

11

19

13

14

16

17

55

18

15

21

14A

22

14A

z

x

y

# FIG. 1

# FIG. 2

57

57b

57a

57c

57a

57b

FIG. 3

# FIG. 4

**FIG. 5**

## INTERNATIONAL SEARCH REPORT

| | International application No. |
|---|---|
| | PCT/JP2015/085169 |

| A. CLASSIFICATION OF SUBJECT MATTER |
|---|
| *F16F9/32*(2006.01)i, *F16F9/04*(2006.01)i, *F16F9/48*(2006.01)i, *F16M11/04* (2006.01)i, *F16M11/20*(2006.01)i |

According to International Patent Classification (IPC) or to both national classification and IPC

| B. FIELDS SEARCHED |
|---|
| Minimum documentation searched (classification system followed by classification symbols) |
| F16F9/32, F16F9/04, F16F9/48, F16M11/04, F16M11/20 |

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2016 |
| Kokai Jitsuyo Shinan Koho | 1971–2016 | Toroku Jitsuyo Shinan Koho | 1994–2016 |

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| Y<br>A | JP 2014-177963 A  (Herz Co., Ltd.),<br>25 September 2014 (25.09.2014),<br>paragraphs [0015] to [0044], [0053] to [0059];<br>fig. 1 to 6, 8<br>(Family: none) | 1-5<br>6 |
| Y | JP 2005-140268 A  (Shotoku Corp.),<br>02 June 2005 (02.06.2005),<br>paragraph [0023]; fig. 1<br>(Family: none) | 1-5 |

☐ Further documents are listed in the continuation of Box C.　　☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 13 January 2016 (13.01.16) | 26 January 2016 (26.01.16) |

| Name and mailing address of the ISA/ | Authorized officer |
|---|---|
| Japan Patent Office<br>3-4-3,Kasumigaseki,Chiyoda-ku,<br>Tokyo 100-8915,Japan | |
| | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005140268 A